(19)

Europäisches Patentamt
European Patent Office
Office européen des brevets

(11) **EP 1 776 996 A1**

(12) **EUROPEAN PATENT APPLICATION**
published in accordance with Art. 158(3) EPC

(43) Date of publication:
**25.04.2007 Bulletin 2007/17**

(51) Int Cl.:
*B01D 71/34* (2006.01)    *B01D 69/08* (2006.01)
*B01D 71/38* (2006.01)    *C02F 1/44* (2006.01)

(21) Application number: **05755155.8**

(22) Date of filing: **27.06.2005**

(86) International application number:
**PCT/JP2005/012262**

(87) International publication number:
**WO 2006/001528 (05.01.2006 Gazette 2006/01)**

(84) Designated Contracting States:
**AT BE BG CH CY CZ DE DK EE ES FI FR GB GR HU IE IS IT LI LT LU MC NL PL PT RO SE SI SK TR**

(30) Priority: **28.06.2004 JP 2004190060**

(71) Applicant: **Kureha Corporation Tokyo 103-8552 (JP)**

(72) Inventors:
- **TADA, Yasuhiro**
  **c/o Packaging Materials Res. Lab.**
  **Niihari-gun,**
  **Ibaraki 311-3436 (JP)**
- **TANIGUCHI, Shingo**
  **c/o Research Center**
  **Iwaki-shi,**
  **Fukushima 974-8686 (JP)**

- **HINO, Masayuki**
  **c/o Packaging Materials Res. Lab.**
  **Niihari-gun,**
  **Ibaraki 311-3436 (JP)**
- **TAKAHASHI, Takeo**
  **c/o Packaging Materials Res.Lab.**
  **Niihari-gun,**
  **Ibaraki 311-3436 (JP)**
- **SUZUKI, Kenichi**
  **c/o Packaging Materials Res. Lab.**
  **Niihari-gun,**
  **Ibaraki 311-3436 (JP)**
- **MIZUNO, Toshiya**
  **c/o Packaging Materials Res. Lab.**
  **Niihari-gun,**
  **Ibaraki 311-3436 (JP)**

(74) Representative: **HOFFMANN EITLE**
**Patent- und Rechtsanwälte**
**Arabellastrasse 4**
**81925 München (DE)**

(54) **POROUS MEMBRANE FOR WATER TREATMENT AND PROCESS FOR PRODUCING THE SAME**

(57)    A porous membrane for water treatment of the present invention is made of a resin composition containing 100 parts by weight of a polyvinylidene fluoride based resin, and 5 to 13 parts by weight of a polyvinyl alcohol based polymer having a degree of saponification of 10 to 80 mol%. The porous membrane has a permeation wetting tension of 38 to 72 mN/m, and a tensile strength of 7 to 20 MPa, and thus is **characterized by** having the excellent mechanical strength and wettability. This is a porous membrane for water treatment essentially containing the polyvinylidene fluoride based resin, which allows water treatment to be highly efficiently performed on raw water (river water, industrial waste water, and the like), in particular. The porous membrane is manufactured, firstly, by melt-extruding a mixture composition containing a polyvinylidene fluoride based resin, a polyvinyl alcohol based polymer, a plasticizer, and a solvent, and then by extracting the plasticizer and the solvent from the substance thus extruded.

Fig.1

# EP 1 776 996 A1

**Description**

**Technical Field**

The present invention relates to a porous membrane for water treatment essentially containing a polyvinylidene-fluoride based resin, and a method of manufacturing the same. More specifically, the present invention relates to a porous membrane for water treatment which is formed of a polyvinylidene fluoride based resin and a polyvinyl alcohol based polymer, and which can stand long use, and a method of manufacturing the same.

**Background of the Invention**

It has been considered to apply a polyvinylidene fluoride based resin to a porous membrane for a separation process because of the excellence in the weather resistance, chemical resistance, strength ant the like. Although such a polyvinylidene fluoride based resin has excellent characteristics, it has a disadvantage that it does not meet requirement for a mechanical strength because of an improvement in a separation performance of the porous membrane, or an achievement of narrow pore size distribution. Furthermore, such a polyvinylidene fluoride based resin is strongly required to have hydrophilic property in order to be applied for water treatment. Various kinds of discussions and proposals have been made about the hydrophilic porous membrane essentially containing a polyvinylidene fluoride based resin.

Japanese Unexamined Patent Application Publication No. Hei 5-23557 (JP 5-23557 A) discloses a method of producing a hydrophilic heat-resistant membrane. In this method, firstly, a film is made of a solution prepared by mixing and dissolving a polyvinylidene fluoride based polymer and polyvinyl acetate. Then, the polyvinyl acetate in the film is partially saponified to a degree of saponification between 10 mol% or more, and less than 100 mol%, or polyvinyl acetate therein is saponified to a degree of saponification of 100 mol % to form polyvinyl alcohol. The resultant film is the hydrophilic heat-resistant membrane.

Japanese Unexamined Patent Application Publication No. Sho 54-17978 (JP 54-17978 A) discloses a hydrophilized porous composite structure having hydrophilic property in the following manner. Specifically, firstly, the porous spaces of a fluorocarbon resin porous structure are impregnated with an aqueous solution of polyvinyl alcohol. Then, by performing heat treatment, a part of polyvinyl alcohol is made to have the water-insoluble property, and the other part of polyvinyl alcohol is kept being amorphous and having the water-soluble property. In this state, one molecule of the polyvinyl alcohol only swells with water, and no longer dissolves in the water.

According to Japanese Unexamined Patent Application Publication No. Sho 55-102635 (JP 55-102635 A), a microporous membrane made of hydrophilic polyvinylidene fluoride-polyvinyl alcohol alloy is obtained in the following way. To be more precise, firstly, a porous membrane is formed of a solution containing a polymer of vinylidene fluoride and a polymer of vinyl acetate of the amount of about 35 to about 85% by weight of the entire polymer. Then, the porous membrane is hydrolyzed, thereby transforming acetic acid groups to hydroxide groups.

Japanese Unexamined Patent Application Publication No. Sho 61-257203 (JP 61-257203 A) discloses a hydrophilic porous membrane obtained in the following way. Firstly, on a substrate, is cast a polymer dope obtained by mixing a polyvinylidene fluoride, a vinyl alcohol-vinyl acetate copolymer and a solvent common to the above two. The content of the vinyl alcohol-vinyl acetate copolymer to the polyvinylidene fluoride is 10 to 50% by weight. Then, the mixed polymer dope is brought into contact with a coagulant solvent which has the affinity with the above solvent, and which serves as a non-solvent at least for a hydrophobic polymer. In this way, the solvent is removed from the polymer dope, then the coagulant solvent is removed from the gel, and thereby the hydrophilic porous membrane is formed.

These prior technologies have their own characteristics, and the further improvement in the performance is demanded.

**Disclosure of the Invention**

An object of the present invention is to provide a porous membrane for water treatment essentially containing a polyvinylidene fluoride based resin, which is characterized by having an excellent mechanical strength and wettability, and which allows water treatment to be highly efficiently performed on raw water (river water, industrial waste water and the like).

The inventors of the present invention have studied in order to solve the foregoing problem. As a result, the inventors have discovered that a porous membrane obtained by melt-extruding a mixture composition containing a polyvinylidene fluoride based resin, a polyvinyl alcohol based polymer, a plasticizer and a solvent, and by extracting the plasticizer and the solvent from the cooled extruded substance has a high mechanical strength, and a flux maintaining rate improved, probably, due to its wettability of water. Thus, the inventors have achieved the completion of the present invention.

The present invention firstly provides a porous membrane for water treatment, which comprises a resin-com-

2

position containing 100 parts by weight of a polyvinylidene fluoride based resin, and 5 to 13 parts by weight of a polyvinyl alcohol based polymer having a degree of saponification of 10 to 80 mol%. The permeation wetting tension of the porous membrane is 38 to 72 mN/m, and the tensile strength thereof is 7 to 20 MPa.

The present invention secondly provides the porous membrane for water treatment according to the foregoing invention, in which the polyvinylidene fluoride based resin consists of 25% to 98% by weight of a first polyvinylidene fluoride based resin having a weight-average molecular weight of 0.15 to 0.60 million, and 2% to 75% by weight (the total of both is 100% by weight) of a second polyvinylidene fluoride based resin having a weight-average molecular weight of 0.40 to 1.20 million. A ratio of the weight-average molecular weight of the second polyvinylidene fluoride based resin to the weight-average molecular weight of the first polyvinylidene fluoride based resin is 1.2 to 8.0.

The present invention thirdly provides the porous membrane for water treatment according to the first or second invention, in which the porous membrane has been stretched.

The present invention fourthly provides the porous membrane for water treatment according to any of the above first to third inventions, in which the porous membrane has a hollow fiber shape.

The present invention fifthly provides a method of manufacturing the porous membrane for water treatment according to any of the above first to fourth inventions. The method includes the steps of:

melt-extruding a mixture composition containing 100 parts by weight of a polyvinylidene fluoride based resin and 5 to 13 parts by weight of a polyvinyl alcohol based polymer having a degree of saponification of 10 to 80 mol% as well as 70 to 240 parts by weight of a plasticizer and 5 to 80 parts by weight of a solvent per 100 parts by weight of the total of the polyvinylidene fluoride based resin and the polyvinyl alcohol based polymer; and
extracting the plasticizer and the solvent from the substance thus extruded to obtain the porous membrane.

The present invention sixthly provides a method of producing the porous membrane for water treatment according to the above fifth invention. In this method, the polyvinylidene fluoride based resin consists of 25 to 98% by weight of a first polyvinylidene fluoride based resin having a weight-average molecular weight of 0.15 to 0.60 million, and 2 to 75% by weight (the total of both is 100% by weight) of a second polyvinylidene fluoride based resin having a weight-average molecular weight of 0.40 to 1.20 million. A ratio of the weight-average molecular weight of the second polyvinylidene fluoride based resin to the weight-average molecular weight of the first polyvinylidene fluoride based resin is 1.2 to 8.0.

Thus, the present invention can provide a porous membrane for water treatment which contains a polyvinylidene fluoride based resin, which has a high mechanical strength and a high permeation wetting tension as a membrane, and which can stand long use because of 1. excellent chemical resistance, 2. high durability, and 3. excellent contamination resistance in a case where the porous membrane is used as a membrane for water treatment.

## Brief Description of the Drawings

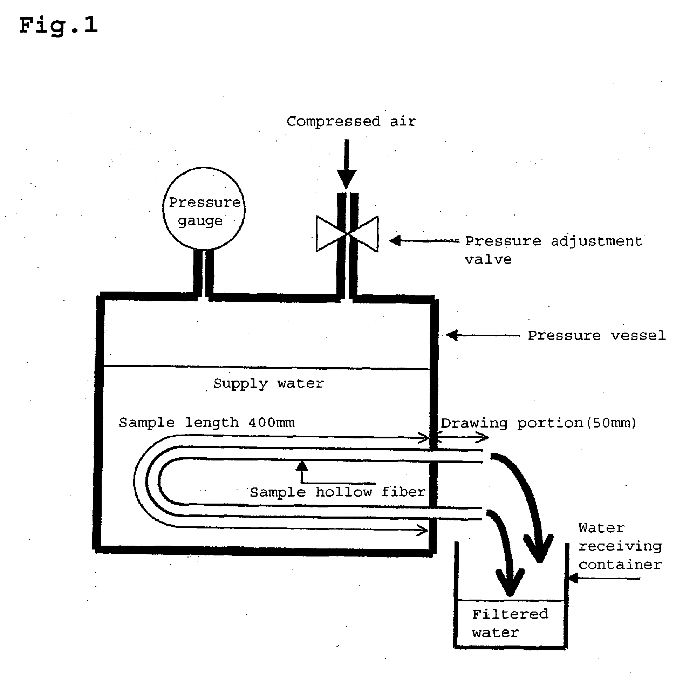

Fig. 1 is a schematic side diagram of flux maintaining rate measurement equipment.

## Detailed Description of the Preferred Embodiments

Descriptions will be given below of a porous membrane of the present invention, and a method of manufacturing the same. The porous membrane comprises a polyvinylidene fluoride based resin, and has hydrophilic property.

In the present invention, an essential raw material is a polyvinylidene fluoride based resin (hereinafter, sometimes abbreviated to PVDF). As the polyvinylidene fluoride based resin, a homopolymer of vinylidene fluoride, a copolymer of vinylidene fluoride and another monomer (or other monomers) copolymerizable with the vinylidene fluoride, or the mixture of them is used. At least one or two or more monomers selected from a group consisting of tetrafluoroethylene, hexafluoropropylene, trifluoroethylene, trifluoroethylene chloride, and vinyl fluoride can be used as the monomer copolymerizable with the vinylidene fluoride. The polyvinylidene fluoride based resin preferably contains 70 mol% or more of vinylidene fluoride as a construction unit. In particular, a homopolymer consisting of 100 mol% of vinylidene fluoride is preferably used because of a high mechanical strength thereof.

In a case of PVDF containing vinylidene fluoride component of 70 mol% or more, the one obtained by suspension polymerization is preferable. According to the preferred embodiment of the present invention, it is preferable to use the following mixture as an essential raw material of the membrane. The mixture consists of: 25% to 98% by weight, further preferably 70% to 97% by weight of first polyvinylidene fluoride based resin (PVDF-I) having a weight-average molecular weight of 0.15 to 0.60 million; and 2% to 75% by weight (the total of both is 100% by weight), further preferably 3% to 30% by weight of second polyvinylidene fluoride based resin (PVDF-II) having a weight-average molecular weight of 0.40 to 1.20 million. In addition, a ratio of the weight-average molecular weight of PVDF-II to that of PVDF-I is preferably 1.2 to 8.0, more preferably 1.5 to 8.0, and most preferably 2.0 to 8.0. When the content of PVDF-II is less than 2% by weight or more than 75% by weight, spherical crystals are formed. This may results in the reduction in the water permeability, mechanical strength, and extensibility. When the above weight-average molecular weight ratio is less than 1 . 2, it is not possible to sufficiently prevent the spherical crystals from being formed. When it exceeds 8.0, it is difficult to mix the two uniformly.

The PVDF used in the present invention is preferably a non-cross-linked one, in order to facilitate melt-extrusion of the composition described below. The melting point thereof is preferably 160 to 220°C, further preferably 170 to 180°C, and even further preferably 172 to 178°C. At less than 160°C, the heat resistant deformation of the formed membrane tends to be insufficient. At more than 220°C, the melt-mixing property is deteriorated, and this makes it difficult to form a homogeneous membrane. The PVDF to be used in a mixed state preferably has the melting points within the above range.

The melting point means the peak temperature of heat absorption which occurs with the melt of the crystal of the resin, and which is measured with a differential scanning calorimeter (DSC). A composition of mixed raw materials for forming the porous membrane for water treatment is formed by adding a polyvinyl alcohol based polymer, a plasticizer, and a solvent to the above PVDF.

The polyvinyl alcohol based polymer (sometimes abbreviated to PVA) used in the present invention is a partially saponified material of polyvinyl ester or modified polyvinyl ester. A vinylester unit here includes the one derived from, for example, vinyl acetate, vinyl formate, vinyl propionate, vinyl butyrate, vinyl isobutyrate, vinyl pivalate, vinyl caprylate, or vinyl versatate. Among them, the vinyl acetate unit is preferable from the industrial point of view. As these polymers, there are available commercialized products of the stable quality in a degree of polymerization, a degree of saponification, and the like. The degree of saponification is 10% to 80%, preferably 20% to 60%, and more preferably 30% to 50%. An average degree of polymerization is preferably 50 to 3500, more preferably 50 to 3000, and most preferably 100 to 2500. The used amount of the polyvinyl alcohol based polymer per 100 parts by weight of PVDF is 5 to 13 parts by weight, preferably 6 to 12 parts by weight, and more preferably 8 to 11 parts by weight. A use of an insufficient amount of the polyvinyl alcohol based polymer does not develop wettability, and this facilitates a reduction in water permeability due to clogging of the membrane, and thereby prohibits water from permeating the membrane. A use of an excessive amount of the polyvinyl alcohol based polymer deteriorates the original chemical resistance and mechanical strength of PVDF. In addition, since the extensibility of PVDF is also reduced, it becomes difficult to stretch the membrane for the purpose of improving water permeability.

In particular, a polyvinyl alcohol based polymer having an ionic group at the edge thereof is preferable. An example of this is: a polyvinyl alcohol based polymer disclosed in Japanese Patent No. 2826194 (JP 2826194 C), and obtained by saponifying a polyvinyl ester polymer having an ionic group at the edge (however, excluding a polyvinyl ester polymer having a cationic group); or a polyvinyl alcohol based polymer disclosed in Japanese Patent No. 3150304 (JP 3150304 C), and having an ionic group at one edge and a degree of polymerization of 50 to 3000. The higher degree of saponification a polyvinyl alcohol based polymer has, the higher affinity with water the polyvinyl alcohol based polymer has. However, this tends to raise problems that: (1) the membrane or PVA acquires water solubility; and (2) it becomes difficult to uniformly disperse the PVA because of the reduction in the affinity with PVDF. On the other hand, when having a low degree of saponification, the polyvinyl alcohol based polymer can finely disperse in a PVDF membrane, but does not provide a sufficient effect of imparting the wettability. Accordingly, the added amount of the polyvinyl alcohol based polymer needs to be increased in order to obtain necessary wettability. Otherwise, as described above, the original properties of PVDF membrane are possibly deteriorated.

Nevertheless, the inventors of the present invention studied and revealed that the above-mentioned polyvinyl alcohol based polymer having an ionic group at the edge provides a large effect of imparting wettability even if the PVA has a relatively low degree of saponification. In other words, such a polyvinyl alcohol based polymer has an excellent dispersion property in PVDF membrane, and provides a large effect of imparting wettability while being insoluble in water. For this reason, the resistance to clogging can be remarkably improved by using a PVDF membrane for water treatment containing the polyvinyl alcohol based polymer of a relatively small added amount which is small enough not to substantially affect the original properties of the PVDF membrane.

Generally known plasticizers can be used as the plasticizer in the present invention. In particular, the preferable one is aliphatic polyester formed of dibasic acid and glycol. For example, the following polyester is preferably used: adipic acid based polyesters such as adipic acid-propylene glycol based one, and adipic acid-1, 3-butylene glycol based one; sebacic acid based polyester such as sebacic acid-propylene glycol based one; and azelaic acid based polyester such as azelaic acid-propylene glycol based one, azelaic acid-1, 3-butylene glycol based. The use of any of these plasticizers can allow only the extremely small amount of the polyvinyl alcohol based polymer to be removed from the membrane together with the plasticizer in a process of forming the number of pores, that is, in a process of forming the number of pores by extracting the plasticizer. The reason for this has not yet completely been clarified, but one of the estimated reason is that a polyvinyl alcohol based polymer is selectively distributed in a PVDF phase because the polyvinyl alcohol based polymer has no compatibility with aliphatic polyester, and good affinity with PVDF. As for the used amount of the plasticizer per 100 parts by weight of the total of PVDF and PVA, preferably 70 to 240 parts by weight, more preferably 100 to 190 parts by weight, most preferably 120 to 170 parts by weight are used. The use of the insufficient amount of the plasticizer reduces the porosity, and thereby deteriorates water permeation or water permeability. In contrast, the use of the excessive amount of the plasticizer makes the porosity too large, and this deteriorates the mechanical strength of the PVDF membrane.

A solvent which can dissolve PVDF at a temperature of 20 to 250°C is used as the solvent of PVDF. This includes, for example, N-methylpyrrolidone, dimethylformamide, dimethylacetoamide, dimethylsulfoxide, methyl ethyl ketone, acetone, tetrahydrofuran, dioxane, ethyl acetate, propylene carbonate, cyclohexane, methyl isobutyl ketone, dimethyl phthalate, and the mixed solvent thereof. The N-methylpyrrolidone (NMP) is particularly preferable because of its stability at high temperatures. As for the used amount of the solvent per 100 parts by weight of the total of PVDF and PVA, 5 to 80 parts by weight, more preferably 8 to 60 parts by weight, most preferably 15 to 40 parts by weight are used. The use of the amount of the solvent within any of these ranges is preferable because this allows the PVDF and the plasticizer to be mixed uniformly, allows the porosity commensurate with the added amount of the plasticizer to be obtained, and thus allows the pores to be effectively formed by extracting the plasticizer. The total amount of the plasticizer and the solvent is preferably 100 to 250 parts by weight, and more preferably 150 to 200 parts by weight, per 100 parts by weight of the total of the PVDF and the PVA. This is because the above amount is effective at obtaining the membrane structure suitable as a porous membrane for water treatment. The used amount of the solvent is preferably 5% to 30% by weight, more preferably 7% to 25% by weight, most preferably 10% to 20% by weight, of the total of the plasticizer and the solvent. In an actual manufacturing process, the plasticizer and the solvent are added by using, for example, a method in which they are together added to a molten resin from the downstream position of an extrusion machine at the time of melt extrusion.

The method of manufacturing the porous membrane for water treatment according to the present invention will be described below. A resin mixture prepared by mixing the predetermined amounts of the PVDF and the PVA is previously mixed with a Henschel mixer. This mixture is supplied from a powder supply section provided in the upstream portion of a twin-screw extruder, and the mixed solution of the plasticizer and the solvent is supplied from a liquid supply section provided in the downstream side thereof. The resin mixture generally becomes a homogeneous mixture at a temperature of 140 to 270°C, and preferably 180 to 230°C, while passing through the extrusion machine, before the resin mixture is extruded. Then, the resin mixture is extruded in the form of a hollow fiber or a flat membrane from a hollow nozzle or a T-die (Unless otherwise specified, descriptions will be hereinafter mainly given of the example of the manufacturing of the hollow fiber form).

The molten hollow fiber body extruded from the nozzle passes through a refrigerant, thereby being cooled and solidified. The cooling and solidification progress from the outer surface, which is one of the two surfaces of the hollow fiber. In contrast, the flat membrane extruded from the T-die is brought into contact with a cooling drum or a cooling roller whose surface temperature is controlled, thereby being cooled.

The temperature of the refrigerant or cooling drum can be preferably selected from the considerable wide range of 5 to 120°C, more preferably 10 to 100°C, and most preferably 30 to 80°C. When the melt-extruded hollow fiber substance is cooled by using the refrigerant such as water, phase separation occurs among the PVDF, the plasticizer and the solvent in a portion of the body, which is in contact with the refrigerant. A portion of the phase-separated plasticizer is to be a micropore later, while the phase-separated PVDF is crystallized. At this time, the (spherical) crystal growth rate is controlled (decelerated), and thus the hollow fiber body having crystal properties suitable for later stretching can be obtained. For this reason, in the present invention, the mixture consisting of at least two kinds of PVDFs having a specific molecular weight is preferably used. The formation of the spherical crystals may obstruct the permeation of water, and also may reduce the mechanical strength and extensive property due to incomplete joining of spherical particles of the resin in the interface therebetween. The melt-extruded hollow fiber substance is cooled from the surface being in contact with the refrigerant, and the particle size distribution (fine on the cooled surface side, and coarse on the opposite side) of the crystals formed at a slow rate in a thickness direction of the hollow fiber substance improves the mechanical strength, and smoothens the later stretching.

The cooled and solidified hollow fiber substance is subsequently introduced into an extraction liquid, and the plasticizer and the solvent are removed by extraction. The extraction liquid is not specifically limited as long as the liquid does not dissolve PVDF but dissolves the plasticizer and the solvent. A polar solvent having a boiling point of about 30 to 100°C is suitable, and an example thereof is methanol and isopropyl alcohol in a case of alcohol, or dichloromethane and 1, 1, 1-trichloroethane in a case of chlorinated hydrocarbons. The extraction of the plasticizer and the solvent allows the hollow fiber substance to be porous. On the exposed surface of the hollow fiber and on the inner surface of the pore, wettability are imparted by polyvinyl alcohol which exists on the matrix surface of the PVDF.

The hollow fiber substance from which the plasticizer and the solvent have been extracted is preferably heat-treated, and thus the crystallization rate is increased for the purpose of improving stretching operability. The conditions of the heat treatment are: a temperature is 80 to 160°C, and a time period is 1 to 3600 seconds; and more preferably a temperature is 100 to 140°C, and a time period is 3 to 900 seconds. Then, the hollow fiber substance is stretched, and thus the porosity and the pore diameter are increased. Generally, the stretching is preferably performed by using a one-way stretching method in which the hollow fiber substance is stretched in the lengthwise direction thereof with a pair of rollers rotating at the respective different circumferential speeds. A stretch ratio is preferably about 1.2 to 4.0 times, and more preferably about 1.4 to 3.0 times.

It is particularly preferable to immerse, in an eluent, the porous membrane for water treatment made of the PVDF according to the present invention, and obtained in the above procedures. This is because the eluent treatment allows the water permeability to be remarkably increased without deteriorating the substantial properties of the porous membrane. As the eluent, alkaline solution, acid solution, or the extract of the above plasticizer is used. The reason why the above eluent treatment increases the water permeability of the porous membrane is not definitely clarified. However, the following is a possible reason. The stretching extends the wall surface of the micropore, and the plasticizer left thereon is exposed. Then, the exposed plasticizer is efficiently removed by the eluent treatment. It is understood that the alkali or the acid serving as an eluent has an action accelerating the dissolution and removal of the polyester used as a plasticizer for polyvinylidene fluoride based resin. This action is caused by decomposing and solubilizing the polyester. Accordingly, as the alkaline solution, an aqueous or aqueous/alcohol solution of strong bases such as sodium hydroxide, potassium hydroxide and calcium hydroxide, having a pH of 12 or more, more preferably 13 or more, is preferably used. On the other hand, as the acid solution, an aqueous or aqueous/alcohol solution of strong acid such as hydrochloric acid, sulfuric acid and phosphoric acid, having a pH of 4 or less, more preferably 3 or less, particularly 2 or less, is preferably used.

As the eluent, the above extract having a boiling point of 30 to 100°C is used. The eluent treatment is preferably performed in a state the porous membrane is fixed, so that the porous membrane would not be contracted.

The porous membrane for water treatment of the present invention obtained in the above manner has a tensile strength of 7 to 20 MPa, and preferably 8 to 20 MPa. A tensile strength of less than 7 MPa possibly causes the membrane to be broken by a water flow during a filtration operation, or by a cleaning operation using air scrubbing. A permeation wetting tension is 38 to 72 mN/m, and preferably is 42 to 72 mN/m. A permeation wetting tension of less than 38 mN/m has a small effect on improvement in a flux maintaining rate. The permeation wetting tension of 72 mN/m means that the membrane is wetted by 100% of water. More than this value cannot theoretically be considered. The porosity is preferably 60 to 85%, more preferably 65 to 80%, and most preferably 70 to 75%. The porosity of less than 60% does not allow the sufficient amount of water to permeate. In contrast, the porosity of more than 85% does not allow the sufficient mechanical strength. A breaking extension rate is preferably 20% to 100%, and more preferably 25% to 80%. The breaking strength rate of less than 20% possibly causes the hollow fiber to be broken by a cleaning operation using water flow or air scrubbing, in a case of where the porous membrane for water treatment of the present invention is used in a hollow fiber form. It is usually difficult to obtain an stretched membrane (oriented membrane) having a breaking extension rate of more than 100%. A pure water flux (the amount of permeating water) is preferably 20 $m^3/m^2 \cdot$ day $\cdot$ 100kPa or more, and more preferably 30 $m^3/m^2 \cdot$ day $\cdot$ 100kPa or more. The thickness of the membrane is preferably 5 to 800 $\mu$m, more preferably 50 to 600 $\mu$m, and most preferably 150 to 500 $\mu$m. The thickness of the membrane of less than 5 $\mu$m makes the mechanical strength insufficient, so that the membrane would be possibly broken during the filtration operation. The thickness of the membrane of more than 800 $\mu$m causes the filtration resistance to increase, so that a sufficient amount of permeated water cannot be obtained.

In case of the hollow fiber membrane, the outer diameter thereof is preferably about 0.3 to 3 mm, and more preferably 1 to 3 mm. The outer diameter of less than 0.3 mm necessarily requires the hollow section to be narrow. This increases the pressure loss in the hollow section, and reduces an effective fiber length. For this reason, only the insufficient amount of permeated water is obtained. The outer diameter of more than 3 mm reduces the volume-efficiency (area of the membrane/volume of the membrane ratio).

Both of an stretched and unstretched membranes can be used as the porous membrane for water treatment of the present invention.

**Examples**

The present invention will be hereinafter more specifically described using examples and comparative examples, but is not limited to these examples.

The following measurement values were measured in the following manner.

(Weight-average molecular weight (Mw) and number-average molecular weight (Mn))

A weight-average molecular weight (Mw) and a number-average molecular weight (Mn) were measured as a polystyrene-equivalent molecular weight at a temperature of 40°C, and at a flow rate of 10 ml/minute in the gel permeation chromatography (GPC) method, by using: GPC equipment (GPC-900) available from JASCO Corporation; Shodex KD-806 as a column, and Shodex KD-G as a precolumn, both available from SHOWA DENKO K.K.; and N-methylpyrrolidone as a solvent..

(Porosity)

Firstly, the length, width and thickness (the outer and inner diameters in a case of the hollow fiber) of the porous membrane were measured, thereby calculating the apparent volume $V$ (cm$^3$) of the porous membrane. Furthermore, the weight $W$ (g) was measured to determine the porosity using the following equation.

$$\text{Porosity (\%)} = (1 - W/(V \times \rho)) \times 100 \qquad (1)$$

where $\rho$: specific gravity of PVDF (=1.78g/cm$^3$)

(Amount of permeated water (flux))

The porous membrane was immersed in ethanol for 15 minutes, and then in water for 15 minutes, thereby being hydrophilized. Then, the amount of permeated water (flux) was measured at a water temperature of 25°C, and at a pressure difference of 100 kPa. In a case of a test on the hollow fiber porous membrane, the test length (the length of the portion in which filtration is performed) is 800 mm. The area of the membrane was calculated on the basis of the outer diameter using the following equation.
(Unit: m$^3$/m$^2$ · day · 100kPa)

$$\text{Area of membrane (m}^2) = \text{outer diameter} \times \pi \times \text{length}$$

(Average diameter of pore)

The average diameter of the pores was measured in a half dry method by using "Perm Porometer CFP-200AEX" available from Porous Material, Inc. in conformity with ASTM F316-86, and ASTM E1294-89.

(Maximum diameter of the pore)

The maximum diameter of the pore was measured in a bubble point method by using "Perm Porometer CFP-200AEX" available from Porous Material, Inc. in conformity with ASTM F316-86, and ASTM E1294-89. As a test solution, perfluoro polyester (trade name: Galwick) was used.

(Tensile strength and a breaking extension rate)

A tensile strength and a breaking extension rate were measured in an atmosphere of a temperature of 23°C and a relative humidity of 50%, by using a tensile test machine ("RTM-100" available from Toyo Boldwin Co.Ltd.), under conditions that an initial sample length is 100 mm, and that a cross head speed is 200 mm/minute. In a case of the hollow fiber membrane, the measurement was performed on one hollow fiber sample regardless of fiber diameter. In a case of the flat membrane, the measurement was performed on a strip sample cut with a width of 10 mm.

(unit of tensile strength: MPa, and unit of breaking extension rate: %)

(Permeation wetting tension)

Solutions having different surface tensions are prepared by mixing water and ethanol in the respective different mixing ratios. The relationships between the concentration of ethanol and the surface tension are defined by referring to "Kagaku Kogaku Binran Kaitei Dai-Go-han (chemical engineering handbook, revised fifth edition), Maruzen Co. Ltd. ). In a case of the hollow fiber membrane, a sample was cut with a length of 5 mm, and in a case of the flat membrane, a sample was cut into a 5 mm square shape. The samples were gently put on the solution in an atmosphere of a temperature of 25°C and a relative humidity of 50%. The permeation wetting tension of the porous membrane was measured as the maximum surface tension of the solution which allows each of the samples to be go down 100 mm or more below the water surface in one minute or less.

(Flux maintaining rate)

Firstly, polyaluminum chloride as a coagulant was added in a concentration of 10 ppm to the river water of Koise River sampled in Ishioka City in Ibaraki Prefecture, and the mixture was then stirred. Subsequently, the mixture was left stand for 6 hours. Then, a filtration test was performed by using the supernatant solution of the mixture as supply water, and thus the resistance to clogging was evaluated. The turbidity and chromaticity of the supply water were 6.2 N.T.U, and 9.0, respectively.

Firstly, the porous membrane samples were immersed in ethanol for 15 minutes, and then in water for 15 minutes, thereby being wet. In a case where the form of the membrane was the hollow fiber, the porous hollow fiber was mounted in an apparatus shown in Fig. 1 so that the test length (the length of a part in which the filtration was performed) would be 400 mm. Both end of the fiber were put out of a pressure vessel to be used as outlet portions. The length of each outlet portion (a part in which the filtration was not performed, and which extends from a joint portion with the pressure vessel to the end thereof) was 50 mm at each end. Pure water (at a water temperature of 25°C) was filled in the pressure resistant vessel so that the porous hollow fiber would be fully immersed in the supply water until the measurement was completed. Then, the filtration was performed while the pressure in the pressure resistance vessel is being maintained at 50 kPa. An amount of initial permeated water was defined as the weight (g) of the filtrated water flowing out of both ends for the first one minute after the filtration started.

Then, instead of the pure water, the supply water (at a water temperature of 25°C) was filled in the pressure resistant vessel so that the porous hollow fiber would be fully immersed in the supply water until the measurement was completed. Subsequently, the filtration was performed for 30 minutes while the pressure in the pressure resistant vessel is being maintained at 50 kPa. An amount of permeated water after 30 minutes' filtration was defined as the weight of the water flowing out of both ends for one minute from 29th minute to 30th minute after the filtration started. A flux maintaining rate was calculated by using the following equation.

```
Flux maintaining rate (%) = (the amount of the permeated water after 30 minutes' filtration (g)) /

(initial permeated water (g)) ×100
```

(Example 1)

A mixture A was obtained, with the Henschel mixer, by mixing: 95 parts by weight of the first polyvinylidene fluoride resin (PVDF-I) (powder) having a weight-average molecular weight (Mw) of $4.12 \times 10^5$; 5 parts by weight of the second polyvinylidene fluoride resin (PVDF-II) (powder) having Mw of $9.36 \times 10^5$; and 6.5 parts by weight of a polyvinyl alcohol based polymer (terminal-denaturated polyvinyl alcohol being available from KURARAY CO. LTD., "POVAL LM-10HD", and having an average degree of saponification of 40 mol%). In addition to this, a mixture B (180 parts by weight) was obtained by mixing and stirring, at a normal temperature, 148.5 parts by weight (per 100 parts by weight of the above mixture A) of adipic acid based polyester plasticizer ("PN-150" available from ASAHI DENKA Co. Ltd.,) as an aliphatic polyester, and 31.5 parts by weight (per 100 parts by weight of the above mixture A) of N-methylpyrrolidone (NMP) as a solvent.

The mixture A and the mixture B were kneaded at a barrel temperature of 220°C by using an intermeshing co-rotating type of twin-screw extruder (available from PRABOR Co. Ltd., the diameter of a screw is 30 mm, L/D=48). Specifically, the mixture A was supplied from a powder supply portion provided in a position 80 mm away from the uppermost stream portion of a cylinder. The mixture B heated at 160°C was supplied in a mixture A/B ratio of 100/180 (specific gravity ratio) from a liquid supply portion mounted in a position 480 mm away from the uppermost stream portion of the cylinder, and then they were kneaded. The kneaded substance was extruded in a hollow fiber form from a nozzle having a circular slit with an outer diameter of 5 mm and an inner diameter of 3.5 mm at an extruding rate of 17.6 g/min. At this time, the air was injected into a hollow portion of the fiber at an injection rate of 9.5 $cm^3$/min from a ventilation hole mounted in the center of the nozzle.

The extruded hollow fiber formed body was introduced, while being melted, into a water bath in which a temperature is maintained at 40°C, and which has a water surface 280 mm away from the nozzle (that is, there is an air gap of 280 mm), and then was cooled and solidified (It stayed in the water bath for about 5 seconds). Thereafter, the formed body was drawn at a drawing rate of 10 m/min, and then was wound. Thus, a first intermediate formed body was obtained.

Subsequently, the first intermediate formed body was immersed for 30 minutes in dichloromethane at a room temperature with vibration applied thereto, while being fixed so as not to contract in a lengthwise direction thereof. Thus, the aliphatic based polyester and the solvent were extracted. Subsequently, the resultant first intermediate formed body was heated at a temperature of 120°C in an oven for 1 hour while being fixed. Thereby, the dichloromethane was removed, and the heat treatment is performed. A second intermediate formed body was thus obtained. The second intermediate formed body was then stretched 1.8 times in a lengthwise direction at an ambient temperature of 25°C. Thereafter the stretched second intermediate formed body was immersed in dichloromethane with vibration applied thereto at a room temperature for 30 minutes while being fixed so as not to contract in a lengthwise direction thereof. Thus, the elution treatment was performed. Subsequently, the second intermediate formed body was heated at 150°C in an oven for 1 hour, while being fixed. Thereby, the dichloromethane was removed, and the heat set treatment was performed. In this way, a polyvinylidene fluoride based resin porous hollow fiber was obtained.

(Example 2)

A polyvinylidene fluoride based resin porous hollow fiber was obtained in the same manner as that of Example 1, except that a mixture A obtained by changing the added amount of the polyvinyl alcohol based polymer same as that of Example 1 to 10 parts by weight was used.

(Example 3)

A polyvinylidene fluoride based resin porous hollow fiber was obtained in the same manner as that of Example 2, except that a polyvinyl alcohol based polymer ("POVAL L-8" available from KURARAY CO. LTD.) having an average degree of saponification of 70 mol % was used, and that the stretch ratio was changed to 2.8.

(Example 4)

A polyvinylidene fluoride based resin porous hollow fiber was obtained in the same manner as that of Example 1, except that a mixture A obtained by changing the added amount of the polyvinyl alcohol based polymer same as that of Example 1 to 12.5 parts by weight was used.

(Comparative example 1)

A polyvinylidene fluoride based resin porous hollow fiber was obtained without adding the polyvinyl alcohol based polymer in the same manner as that of Example 1, in which 148.5 parts by weight of the same adipic acid based polyester plasticizer and 31.5 parts by weight of the same NMP as those of Example 1 were mixed with 100 parts by weight of the same PVDF mixture as that of Example 1.

(Comparative example 2)

12.6% by weight of PVDF having an Mw of $4.12 \times 10^5$, and 5.4 % by weight of a polyvinyl alcohol based polymer ("POVAL LM-10HD" available from KURARAY CO. LTD.) having an average degree of saponification of of 40 mol% were dissolved by heat in a mixture solvent of 61.5% by weight of acetone and 20.5% by weight of dimethylformamide (DMF). This solution then was cast on a glass plate. Immediately after this, the glass plate with the solution thereon was immersed in an alternate flon solvent (AK-225 available from ASAHI GLASS CO. LTD.) for 10 minutes. Subsequently, it was air-dried at a room temperature. Thus, a polyvinylidene fluoride based resin porous membrane was obtained.

(Comparative example 3)

A polyvinylidene fluoride based resin porous membrane was obtained in the same manner as that of Comparative example 2, except that 15. 54 o by weight of PVDF having an Mw of $4.12 \times 10^5$, and 0.82% by weight of PVDF having an Mw of $9.36 \times 10^5$, and 1.64% by weight of a polyvinyl alcohol based polymer ("POVAL LM-10HD" available from KURARAY CO. LTD.) having an average degree of saponification of 40 mol% were dissolved by heat in a mixture solvent of 61.5% by weight of acetone and 20.5% by weight of dimethylformamide (DMF).

(Comparative example 4)

A polyvinylidene fluoride based resin porous hollow fiber was obtained in the same manner as that of Example 1, except that a mixture A obtained by changing the added amount of the polyvinyl alcohol based polymer same as that of Example 1 to 3 parts by weight was used.

(Comparative example 5)

The fiber forming was performed in the same manner as that of Example 1 except that a mixture A obtained by changing the added amount of the polyvinyl alcohol based polymer same as that of Example 1 to 15 parts by weight was used. After the extraction and heat treatment were performed, the stretching was performed, but a breaking occurred at this time. This made it impossible to stretch a fiber up to a stretch ratio of 1.2 or more.

The physical properties of the polyviylidene fluoride based resin porous hollow fibers obtained in Examples 1 to 4 and Comparative examples 1 to 5 were measured. The results are shown in Table 1.

Table 1

| | | | Example 1 | Example 2 | Example 3 | Example 4 | Comparative example 1 | Comparative example 2 | Comparative example 3 | Comparative example 4 |
|---|---|---|---|---|---|---|---|---|---|---|
| Composition | Mixture A | Mw (×10⁵) of PVDFI *1 | 4.12 | 4.12 | 4.12 | 4.12 | 4.12 | 4.12 | 4.12 | 4.12 |
| | | Mw (×10⁵) of PVDFII | 9.36 | 9.36 | 9.36 | 9.36 | 9.36 | - | 9.36 | 9.36 |
| | | Mw (×10⁵) of PVDF | 4.38 | 4.38 | 4.38 | 4.38 | 4.38 | 4.12 | 4.38 | 4.38 |
| | | Parts by weight (PVDFI / PVDFII) | 95/5 | 95/5 | 95/5 | 95/5 | 95/5 | 100/0 | 95/5 | 95/5 |
| | | Ratio (Mw of PVDFII / Mw of PVDFI) | 2.27 | 2.27 | 2.27 | 2.27 | 2.27 | - | 2.27 | 2.27 |
| | | Degree of Polymerization of PVA | About 500 | About 500 | About 500 | About 500 | - | About 500 | About 500 | About 500 |
| | | Degree of Saponification(mol%) | 40 | 40 | 70 | 40 | - | 40 | 40 | 40 |
| | | Parts by weight of PVA | 6.5 | 10 | 10 | 12.5 | No | 42.9 | 10 | 3 |
| | | Mixing ratio by weigh (PVDF/PVA) | 100/6.5 | 100/10 | 100/10 | 100/12.5 | 100/0 | 100/42.9 | 100/10 | 100/3 |
| | Mixture B | Polyester plasticizer (PN-150) (parts by weight) *4 | 148.5 | 148.5 | 148.5 | 148.5 | 148.5 | | | 148.5 |
| | | Solvent (parts by weight) (NMP) *2, *4 | 31.5 | 31.5 | 31.5 | 31.5 | 31.5 | | | 31.5 |
| | | Ratio by weight (mixture A / mixture B) | 100/180 | 100/180 | 100/180 | 100/180 | 100/180 | | | 100/180 |
| Spinning and stretching conditions | | Temperature of the water bath (°C) | 40 | 40 | 40 | 40 | 40 | | | 40 |
| | | Drawing rate (m/min) | 10 | 10 | 10 | 10 | 10 | | | 10 |
| | | Stretch ratio | 1.8 | 1.8 | 2.8 | 1.8 | 1.8 | No | No | 1.8 |
| | | Eluent treatment (eluent) | DCM *3 | DCM | DCM | DCM | DCM | No | No | DCM |
| Physical properties of porous membranes | | Outer diameter (mm) | 1.44 | 1.18 | 1.22 | 1.12 | 1.50 | - | - | 1.45 |
| | | Inner diameter (mm) | 0.94 | 0.61 | 0.75 | 0.57 | 0.93 | - | - | 0.95 |
| | | Thickness of membrane (mm) | 0.25 | 0.29 | 0.23 | 0.30 | 0.28 | 0.30 | 0.30 | 0.25 |
| | | Porosity (%) | 70 | 71 | 78 | 63 | 72 | 49 | 77 | 70 |
| | | Average diameter of pore (μm) | 0.11 | 0.11 | 0.12 | 0.08 | 0.09 | - | - | 0.10 |
| | | Maximum diameter of pore (μm) | 0.17 | 0.18 | 0.19 | 0.15 | 0.16 | - | - | 0.17 |
| | | Tensile strength (MPa) | 10.1 | 10.7 | 14.9 | 12 | 12 | 6.2 | 1.9 | 12 |
| | | Breaking extension rate (%) | 56 | 34 | 25 | 29 | 80 | 29 | 119 | 54 |
| | | Permeation wetting tension (mN/m) | 42 | 48 | 42 | 58 | 33 | 72 | 35 | 38 |
| | | Pure water flux (m3/m2 · day · 100kPa) | 38.7 | 31.0 | 34.0 | 12.3 | 39.8 | - | - | 38.6 |
| | | Flux maintaining rate (%) | 59 | 60 | 44 | 70 | 39 | - | - | 40 |

Mw*1: Weight-average molecular weight, (NMP)*2: N-methylpyrrolidone, DCM*3: Dichloromethane, *4: The added amount per 100 parts by weight of the total of PVDF+PVA

**Industrial Applicability**

The porous membrane for water treatment of the present invention comprises a polyvinylidene fluoride based resin, and has a high mechanical strength, and a high permeation wetting tension as a membrane. In a case where the porous membrane is used as a membrane for water treatment, the porous membrane can stand long use because of 1. excellent chemical resistance, 2. high durability, and 3. excellent contamination resistance. Accordingly, the porous membrane is particularly used for water treatment of river water, dairy waste water (waste water containing the excreta of cattle, swine and the like), industrial waste water, sewage water and the like.

**Claims**

1. A porous membrane for water treatment comprising a resin composition containing 100 parts by weight of a polyvinylidene fluoride based resin, and 5 to 13 parts by weight of a polyvinyl alcohol based polymer having a degree of saponification of 10 to 80 mol%, a permeation wetting tension of the porous membrane being 38 to 72 mN/m, and a tensile strength of the porous membrane being 7 to 20 MPa.

2. The porous membrane for water treatment according to claim 1, wherein
the polyvinylidene fluoride based resin consists of 25 to 98% by weight of a first polyvinylidene fluoride based resin having a weight-average molecular weight of 0.15 to 0.60 million, and 2 to 75% by weight (the total of both is 100% by weight) of a second polyvinylidene fluoride based resin having a weight-average molecular weight of 0.40 to 1.20 million; and
a ratio of the weight-average molecular weight of the second polyvinylidene fluoride based resin to the weight-average molecular weight of the first polyvinylidene fluoride based resin is 1.2 to 8.0.

3. The porous membrane for water treatment according to claim 1 or 2, wherein the porous membrane has been stretched.

4. The porous membrane for water treatment according to any of claims 1 to 3, wherein the porous membrane has a hollow fiber shape.

5. A method of manufacturing the porous membrane for water treatment according to any one of claims 1 to 4, comprising the steps of:

melt-extruding a mixture composition containing 100 parts by weight of a polyvinylidene fluoride based resin and 5 to 13 parts by weight of a polyvinyl alcohol based polymer having a degree of saponification of 10 to 80 mol% as well as 70 to 240 parts by weight of a plasticizer and 5 to 80 parts by weight of a solvent per 100 parts by weight of the total of the polyvinylidene fluoride based resin and the polyvinyl alcohol based polymer; and
extracting the plasticizer and the solvent from the substance thus extruded to obtain the porous membrane.

6. The method of manufacturing the porous membrane for water treatment according to claim 5, wherein
the polyvinylidene fluoride based resin consists of 25 to 98% by weight of a first polyvinylidene fluoride based resin having a weight-average molecular weight of 0.15 to 0.60 million, and 2 to 75% by weight (the total of both is 100% by weight) of a second polyvinylidene fluoride based resin having a weight-average molecular weight of 0.40 to 1.20 million; and
a ratio of the weight-average molecular weight of the second polyvinylidene fluoride based resin to the weight-average molecular weight of the first polyvinylidene fluoride based resin is 1.2 to 8.0.

## Fig.1

<table>
<tr><td colspan="2">**INTERNATIONAL SEARCH REPORT**</td><td>International application No.<br>PCT/JP2005/012262</td></tr>
</table>

A.   CLASSIFICATION OF SUBJECT MATTER
      Int.Cl$^7$ B01D71/34, 69/08, 71/38, C02F1/44

According to International Patent Classification (IPC) or to both national classification and IPC

B.   FIELDS SEARCHED

Minimum documentation searched (classification system followed by classification symbols)
      Int.Cl$^7$ B01D71/34, 69/08, 71/38, C02F1/44

Documentation searched other than minimum documentation to the extent that such documents are included in the fields searched
      Jitsuyo Shinan Koho          1922-1996    Jitsuyo Shinan Toroku Koho    1996-2005
      Kokai Jitsuyo Shinan Koho    1971-2005    Toroku Jitsuyo Shinan Koho    1994-2005

Electronic data base consulted during the international search (name of data base and, where practicable, search terms used)
      WPIL(QWEB)

C.   DOCUMENTS CONSIDERED TO BE RELEVANT

| Category* | Citation of document, with indication, where appropriate, of the relevant passages | Relevant to claim No. |
|---|---|---|
| Y | JP 58-205503 A   (Kanebo, Ltd.),<br>30 November, 1983 (30.11.83),<br>Claims; page 3, upper left column, line 10 to lower left column, line 17; page 4, lower left column, lines 8 to 12; page 5, upper right column, line 8 to lower left column, line 16<br>(Family: none) | 1,3,4,5 |
| Y | JP 06-319967 A   (Nippon Miripoa Kabushiki Kaisha),<br>22 November, 1994 (22.11.94),<br>Claims; Par. No. [0008]<br>(Family: none) | 1,3,4,5 |

[X] Further documents are listed in the continuation of Box C.          [ ] See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br>      06 September, 2005 (06.09.05) | Date of mailing of the international search report<br>      20 September, 2005 (20.09.05) |
| Name and mailing address of the ISA/<br>      Japanese Patent Office | Authorized officer |
| Facsimile No. | Telephone No. |

Form PCT/ISA/210 (second sheet) (January 2004)

**INTERNATIONAL SEARCH REPORT**

| International application No. |
|---|
| PCT/JP2005/012262 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2000-176259 A  (Kuraray Co., Ltd.),<br>27 June, 2000 (27.06.00),<br>Par. Nos. [0008], [0009]<br>(Family: none) | 1,3,4,5 |
| Y | Mitsuo FUJII et al., "Plastic no Jissai<br>chishiki (Dai 4 Pan)", ToyoKeizai Inc.,<br>26 December, 1985 (26.12.85), pages 62 to 65 | 5 |
| Y | JP 05-317664 A  (Kuraray Co., Ltd.),<br>03 December, 1993 (03.12.93),<br>Par. No. [0026]<br>(Family: none) | 5 |
| A | JP 61-257203 A  (Terumo Corp.),<br>14 November, 1986 (14.11.86),<br>Claims<br>(Family: none) | 2,6 |
| A | JP 64-038103 A  (Terumo Corp.),<br>08 February, 1989 (08.02.89),<br>Claims<br>(Family: none) | 2,6 |
| A | JP 05-023557 A  (Asahi Chemical Industry<br>Co., Ltd.),<br>02 February, 1993 (02.02.93),<br>Claims<br>(Family: none) | 2,6 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5023557 A
- JP 54017978 A
- JP 55102635 A
- JP 61257203 A
- JP 2826194 B
- JP 2826194 C
- JP 3150304 B
- JP 3150304 C

### Non-patent literature cited in the description

- Kagaku Kogaku Binran Kaitei Dai-Go-han. Maruzen Co. Ltd,